# EUROPEAN PATENT APPLICATION

(11) **EP 4 546 560 A2**
(43) Date of publication of application: **30.04.2025**
(21) Application number: 24204522.7
(22) Date of filing: 03.10.2024
(51) Int. Cl.: H01Q 1/22, H01Q 13/20

(54) **RADIATING SIGNAL CARRIER-BASED ASSET TRACKING**

(30) Priority: 04.10.2023 US 202363542420 P
(71) Applicant: United Parcel Service Of America, Inc., Atlanta, GA 30328 (US)
(72) Inventor: BELL, Julian Leland, Decatur, GA (US); WALL, Patrick, Atlanta, GA (US)
(74) Representative: Zacco Sweden AB

(57) **Abstract**

Various embodiments described herein are directed to utilizing a radiating antenna that is configured to transmit and/or receive data to/from one or more tags in spatially discrete sections along the antenna to detect the location of assets, as described herein. Accordingly, aspects of the present disclosure do not require multiple antennas to detect assets, leading to improvements in design, configuration, and installation.

## Description

### CROSS REFERENCE TO RELATED APPLICATIONS

This application claims priority from U.S. Provisional Patent Application Ser. No. 63/542,420, filed October 4, 2023, the disclosure of which is hereby incorporated herein by reference in its entirety.

### BACKGROUND

The proliferation of wireless technologies, mobile computing devices, apps, and the Internet has fostered a growing interest in location-aware technologies. These technologies can locate or track objects using techniques such as Global Position System (GPS) triangulation, indoor location sensing (e.g., via beacons), IEEE 802.11 standard-based technologies, Radio Frequency Identification (RFID), and/or the like. Typical location-aware technologies have shortcomings in design, configuration, installation, and functionality. As described in more detail herein, various embodiments of the disclosure improve these location-aware technologies and other conventional solutions.

### SUMMARY

This summary is intended to introduce a selection of concepts in a simplified form that is further described below in the detailed description section of this disclosure. This summary is not intended to identify key or essential features of the claimed subject matter, nor is it intended to be used as an aid in isolation to determine the scope of the claimed subject matter.

In general, various embodiments of the present disclosure provide a novel radiating antenna that provides spatially discretized signaling. In various aspects of the disclosure, an antenna is provided that comprises: an assembly of conductors comprising an inner conductor, a middle conductor, and an outer conductor; and a plurality of switches, wherein: the inner conductor is most central relative to the middle conductor and the outer conductor, the middle conductor is situated over the inner conductor, the outer conductor: is situated over the inner conductor and the middle conductor, serves as an outermost layer that is exposed to an environment, and is portioned into a plurality of sections, each section of the plurality of sections comprising one or more slots that are configured to allow a signal to radiate out of the outer conductor and into the environment, and the plurality of switches is configured to operate to cause the signal to travel along the inner conductor and up to the middle conductor at a certain section of the plurality of sections to cause at least a portion of the signal to radiate out of the one or more slots of the certain section, without the signal radiating out the one or more slots of at least one other section of the plurality of sections. In some aspects, the certain section is configured to receive a response from a tag located in the environment that has sent the response based at least in part on receiving the portion of the signal that is radiated out of the one or more slots of the certain section.

In some aspects, at least one of the inner conductor, the middle conductor, or the outer conductor is configured to carry a communication signal to the plurality of switches to operate the plurality of switches. For example, the communication signal may be carried using at least one of a 1-Wire protocol or an SDI-12 protocol.

In some aspects, the inner conductor and the outer conductor are configured to carry a non-radio frequency band signal using a 2-wire protocol to operate the plurality of switches. In addition, the antenna may further comprise capacitive energy storage at each switch of the plurality of switches that is used to power reading circuitry for the switch.

In some aspects, the plurality of switches is configured to be operated via a communication signal carried using a wireless communication protocol. In addition, at least one of the inner conductor, the middle conductor, or the outer conductor is configured to power each switch of the plurality of switches.

In various aspects, an antenna is provided that is partitioned into a plurality of sections along a length of the antenna, wherein each section of the plurality of sections comprises at least one slot that is shaped to correspond to a specific signal frequency such that at least a portion of a signal at the specific signal frequency traveling through the antenna is radiated out of the at least one slot, without the signal radiating out the at least one slot of at least one other section of the plurality of sections. In some aspects, at least one of a signal strength intensity or an orientation of a section of the plurality of sections is controlled by a slot size orientation for the at least one slot and a number of slots. In some aspects, the antenna further comprises an inner conductor, a dielectric, an outer conductor, and a jacket.

In some aspects, the at least one slot is at least one of coupled to or covered by a resonator configured to couple energy from the antenna to the specific signal frequency. For example, the resonator may comprise a uniquely shaped conductor. Additionally, or alternatively, the resonator may be attached on heat-shrink tubing over the at least one slot.

In various aspects, a method is provided that comprises: receiving, by at least one computing entity, a request to identify a location of an asset in an environment; performing, by the at least one computing entity, an iterative process to cause an interrogation signal to radiate out of each section of a plurality of sections of a radiating antenna, wherein an iteration of the iterative process comprises: causing, by the at least one computing entity, the interrogation signal to radiate out of one or more sections of the plurality of sections, without the interrogation signal radiating out of remaining sections of the plurality of sections; and receiving, by the at least one computing entity, tag responses from tags that are coupled to assets in the environment and are within at least one of a distance or a signal strength threshold of the one or more sections that are radiating the interrogation signal; identifying, by the at least one computing entity and based at least in part on the tag responses, the location of the asset in the environment; and causing, by the at least one computing entity, signaling to identify the location of the asset in the environment.

In some aspects, the radiating antenna comprises an inner conductor, a middle conductor, and an outer conductor, and causing the interrogation signal to radiate out of the one or more sections of the plurality of sections, without the interrogation signal radiating out of the remaining sections of the plurality of sections, involves causing one or more switches to at least one of open or close to cause the interrogation signal to travel along the inner conductor and up to the middle conductor at the one or more sections to cause the interrogation signal to radiate out of the one or more sections, without the interrogation signal radiating out of the remaining sections of the plurality of sections. In some aspects, each section of the radiating antenna comprises at least one slot that is shaped to correspond to a specific signal frequency, and causing the interrogation signal to radiate out of the one or more sections of the plurality of sections, without the interrogation signal radiating out of the remaining sections of the plurality of sections, involves causing the radiating antenna to produce the interrogation signal having the specific signal frequency that the at least one slot for the one or more sections is tuned to.

In some aspects, identifying the location of the asset in the environment involves: determining, based at least in part on the tag responses, that a single section of the plurality of sections received a tag response from a tag associated with the asset; and identifying the location of the asset based at least in part on the location being associated with the single section. In some aspects, identifying the location of the asset in the environment involves: determining, based at least in part on the tag responses, that at least two sections of the plurality of sections received tag responses from a tag associated with the asset; comparing signal strength values of the tag responses from the tag associated with the asset received by the at least two sections; and identifying the location of the asset based at least in part on the location being associated with one of the at least two sections that received a tag response from the tag responses from the tag associated with the asset having a highest signal strength value. In some aspects, identifying the location of the asset in the environment involves: determining, based at least in part on the tag responses, that at least two sections of the plurality of sections received tag responses from a tag associated with the asset; comparing signal strength values of the tag responses from the tag associated with the asset received by the at least two sections; determining the signal strength values satisfy a threshold with respect to each other; and responsive to determining the signal strength values satisfy the threshold with respect to each other, comparing at least one other signal characteristic of the tag responses from the tag associated with the asset received by the at least two sections to detect the location of the asset.

### BRIEF DESCRIPTION OF THE DRAWINGS

Having thus described the disclosure in general terms, reference will now be made to the accompanying drawings, which are not necessarily drawn to scale, and wherein:
FIG. 1 is a schematic diagram of an interior housing of a vehicle illustrating an example of using a novel radiating antenna that provides spatially discretized signaling to guide a driver to a location of a particular asset according to various embodiments of the disclosure;
FIG. 2 is a schematic diagram of a sorting facility illustrating an example of using a novel radiating antenna that provides spatially discretized signaling to guide sorting personnel to a location of a particular asset according to various embodiments of the disclosure;
FIG. 3A is a schematic diagram illustrating a first configuration of a radiating antenna that provides spatially discretized signaling according to various embodiments of the disclosure;
FIG. 3B is a schematic diagram illustrating how the first configuration of the radiating antenna radiates a signal according to various embodiments of the disclosure;
FIG. 4A is a schematic diagram of a radiating antenna system according to various embodiments of the disclosure;
FIG. 4B is a schematic diagram of the radiating antenna system of FIG. 4A, which illustrates how specific frequency ranges resonate out of specific sections of a second configuration of a radiating antenna that provides spatially discretized signaling according to various embodiments of the disclosure;
FIG. 5 is a table illustrating a mapping of radiating antenna section IDs to their corresponding storage unit IDs according to various embodiments of the disclosure;
FIG. 6 is a flow diagram of an example process for identifying a location of an asset according to various embodiments of the disclosure;
FIG. 7 is a schematic diagram of an example computing environment in which aspects of the present disclosure operate according to various embodiments of the disclosure;
FIG. 8 is a schematic diagram of an example computing entity that can be used in executing aspects of the present disclosure according to various embodiments of the disclosure; and
FIG. 9 is a schematic diagram of a source computing entity that can be used in executing aspects of the present disclosure according to various embodiments of the disclosure.

### DETAILED DESCRIPTION OF THE INVENTION

The present disclosure will now be described more fully hereinafter with reference to the accompanying drawings, in which some, but not all embodiments of the disclosure are shown. Indeed, the disclosure may be embodied in many different forms and should not be construed as limited to the embodiments set forth herein. Rather, these embodiments are provided so that this disclosure will satisfy applicable legal requirements. Like numbers refer to like elements throughout.

### I. Overview

Conventional location-aware technologies require tedious steps in design, configuration, installation, and/or programming. For example, Tag-reader-based technologies, such as Radio Frequency Identification (RFID), often require multiple antennas, leading to complex design, configuration, and installation. RFID is a way to store and retrieve data through electromagnetic transmission to a Radio Frequency (RF) compatible integrated circuit. An RFID reader reads data emitted from or located within RFID tags. RFID readers and tags use a defined radio frequency and protocol to transmit, receive, and read data. RFID technologies can perform trilateration to detect a location of an item. However, to perform such functionality, RFID technologies, as well as other technologies, often require an array of single-point or discrete reader antennas placed throughout an environment. For example, twenty yards of cable with twelve to fifteen discrete antennas attached to the cable and two readers may be required to sufficiently detect items stored in a package car. However, this type of solution can be expensive because of the large number of components that are required. In addition, this type of solution may require careful installation or constant monitoring of the antennas to ensure that they are all oriented in a similar or optimal position (for optimal transmission and read range), do not break, and/or are all similarly tuned to transmit and/or receive a specified channel.

Some existing location-aware technologies also employ complex logic in their readers. For example, RFID readers are outfitted with various multiplexers to be able to communicate with multiple antennas. An RFID reader typically has between one and four antennas it can read from simultaneously. Each antenna communicates at a given channel or frequency range. Accordingly, when more than four antennas are present, a system will either need to be equipped with additional readers, or a reader will need to be outfitted with additional multiplexers to allow it to switch between additional channels. However, such a design is burdensome and costly (e.g., in terms of added time to configure the multiplexers).

In addition, a reader is limited to the number of antennas it can communicate with as the number of ports the reader has without multiplexers added to the system. Although some readers can have up to eight ports, the number of ports still serves as a limit on the number of antennas that the readers can communicate with. Speed is also impacted. While very small (milliseconds) time is lost with each switch to a port, and further through a multiplexer, time is also lost when switching between channels. This loss of time can impact the ability to see specific objects due to changes in the environment when used to identify the objects in motion.

Other existing location-aware technologies include radiating or "leaky" cable antennas. Radiating cable antennas provide a technique for generating radio frequency (RF) fields that are short ranged but spread consistently along a single axis. For example, radiating cable antennas have been used in subway tunnels to provide RF communications along the length of the tunnels. However, radiating cable antennas typically have a lower read range, and due to their leaky nature have greater single loss along the antenna. As a result, radiating cable antennas tend to work best in tighter areas and shorter runs compared to a long run to a single antenna. In addition, radiating cable antennas are designed to radiate the signal all along a single axis of the cable, making them unable to be used for discretized reading without separating the radiating cable antenna into multiple, individually wired sections.

Accordingly, embodiments of the present disclosure address the various technical challenges described herein with respect to conventional location-aware technologies by utilizing a novel radiating antenna that provides spatially discretized signaling. For example, the radiating antenna may be used to transmit and/or receive data at spatially discrete sections along the antenna to/from one or more tags to detect the location of assets associated with the tags. As such, aspects of the present disclosure do not require multiple antennas to detect the assets, leading to improvements in design, configuration, and installation.

In various embodiments, the novel radiating antenna comprises a structure such as a triaxial radiating cable with multiple concentric conductors inside of the cable along with switching logic that enables a signal to selectively radiate out of, and into, different sections of the radiating antenna. Each of the sections may be configured with one or more gaps or slots in an outer conductor that allows the signal to radiate into or out of the section of the radiating antenna. For example, the radiating antenna may comprise an inner conductor that carries a signal in an X-axis direction and switching logic may enable the signal to selectively "leak" out of the one or more gaps or slots of a particular section in a YZ-plane along the length of the antenna (e.g., substantially perpendicular to the axis of the antenna).

Additionally, or alternatively, the novel radiating antenna may employ uniquely shaped slots and/or resonant elements in different sections of the radiating antenna to resonate and hop between different frequencies or channels along the length of the radiating antenna at different times. For example, FCC frequency hopping requires an RFID reader to jump across the US RFID frequency spectrum (902-928 MHz) in steps of 500 kHz, producing fifty distinct channels, which allows for up to fifty distinct "zones" or sections to be created along a single antenna. This may effectively eliminate the need for switching mechanisms or other logic and/or complex processes as required for conventional location-aware technologies. Meanwhile, the RFID tags being detected are sensitive to all the frequencies in the 902-928 MHz spectrum, and so will respond when they are nearby the signaling section of the radiating antenna, regardless of the specific channel that is being used for signaling.

In some embodiments, the novel radiating antenna may be employed in locating assets in an environment. Here, each section of the radiating antenna may be mapped to a particular area or location in the environment. Therefore, when a particular section of the radiating antenna is transmitting and/or receiving data to and/or from a tag associated with (e.g., coupled to) an asset, the asset can be associated with the area or location that is mapped to the particular section. For example, the different sections of the radiating antenna may be mapped to areas and/or locations on shelves of a package car and used in locating packages stored on the shelves. As a result, instead of equipping the package car with twenty yards of a cable, two readers, and twelve to fifteen discrete antennas attached to the cable, the package car may only need to be equipped with twenty yards of the radiating antenna and one reader.

Thus, various embodiments of the radiating antenna can eliminate the need for careful installation or constant monitoring since the radiating antenna eliminates the need for an array of discreate antennas throughout the environment. In addition, various embodiments of the radiating antenna can provide improved speed in reading tags in that the antenna does not require complicated multiplexed switching logic to switch between channels for reading tags.

Additionally, or alternatively, various embodiments of the radiating antenna involve the use of readers that are less complex as those used with conventional location-aware technologies. More specifically, various embodiments of the radiating antenna can be used with readers that require no additional multiplexers to communicate with multiple antennas since no discrete antennas are needed. For example, when more than four antennas are needed, the radiating antenna does not need to be equipped with additional readers or require additional multiplexers to account for the additional antennas. Instead, embodiments of the radiating antenna can employ switching mechanisms and/or resonant frequency elements (e.g., uniquely sized slots) to hop between various sections across the length of the radiating antenna at different times to detect a present of a tag.

Additionally, or alternatively, various embodiments of the radiating antenna provide more accurate location predictions of assets. Traditional RFID localization approaches are triangulation-based and require tradeoffs between accuracy of localization and number of discrete measurement locations (equivalent to discrete antennas) because of the noisy nature of RFID signaling, especially in industrial environments. This results in systems that either provide very coarse localization, or systems that are highly complex and expensive, involving many RFID antennas, readers, multiplexers, and extensive cabling. Conversely, various embodiments of the radiating antenna involve single-point measurements at very close ranges, using a much lower number of system components, resulting in high-accuracy localization with low system complexity.

### II. Example Uses

Two example are now discussed to provide the reader with context in using embodiments of the novel radiating antenna that provides spatially discretized signaling to track assets within environments. The two examples are applicable to tracking assets that are packages within two different delivery logistics environments. However, the reader should understand that embodiments of the novel radiating antenna can be used in other environments besides delivery logistics environments. For example, embodiments of the novel radiating antenna may be used in a production environment such as an assembly line to track assets that are components being assembled as the components move through the assembly line.

In addition, the reader should understand that embodiments of the novel radiating antenna can be used in for other purposes besides tracking assets. For example, embodiments of the novel radiating antenna may be used in sending spatially discretized communications signaling so that discrete communications can be provided at discrete locations (sections) along the antenna. However, the remainder of the disclosure discusses the use of embodiments of the novel radiating antenna in delivery logistics environments for tracking assets that are packages. Although the reader should not construe this as limiting the scope of the disclosure.

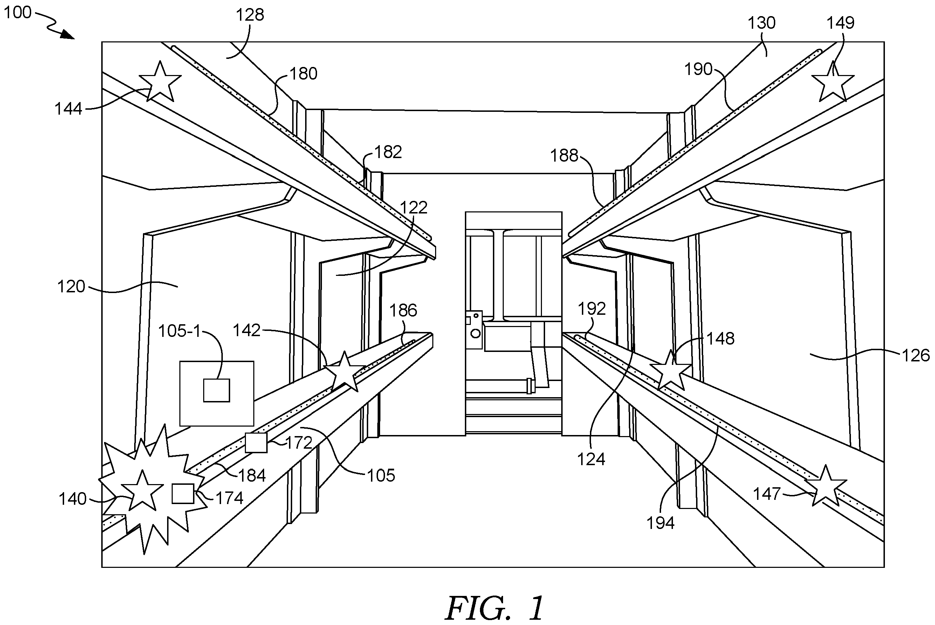

FIG. 1 is a schematic diagram of an interior housing 100 of a vehicle illustrating an example of using radiating antennas that provide spatially discretized signaling to detect locations of assets in the interior housing 100 of the vehicle according to various embodiments. Here, an asset detection system includes a reader (not pictured) and radiating antennas in the form of a cable. In addition, the asset detection system includes lighting devices 140, 142, 144, 147, 148, 149 that are used to guide a driver to a location of a particular asset, as well as reference tags 172, 174 that can help to identify the location of the particular asset and/or to further refine the location of the particular asset. Further, the asset detection system includes a computing entity (not pictured) for performing logic. For example, the computing entity may be considered the reader, or part thereof, or may be separate from the reader and reside either locally (e.g., within) or remotely from the vehicle.

Each of the radiating antennas is divided into different sections 180, 182, 184, 186, 188, 190, 192, 194, with each of the different sections 180, 182, 184, 186, 188, 190, 192, 194 mapped to a particular storage unit 120, 122, 124, 126, 128, 130 found within the interior housing 100 of the vehicle. In various embodiments, the radiating antennas are configured to radiate a signal from the various sections 180, 182, 184, 186, 188, 190, 192, 194 at different times to triangulate or detect a tag 105-1 associated with an asset 105. Accordingly, each section 180, 182, 184, 186, 188, 190, 192, 194 may radiate (and/or receive) data at different times according to any suitable algorithm.

For example, the computing entity may cause one of the radiating antennas to transmit an interrogation/radiation signal out of one or more slots of a first section 184 of the radiating antenna at a first time, which may cause any tag within a distance or signal strength threshold of the first section 184 to emit a tag response back to the first section 184. A tag response may include any suitable data such as a tag identifier (ID), one or more signal strength indicator (RSSI) values, one or more phase angle values, or any other data that contains values specific to a given tag.

At a second time, subsequent to the first time, the computing entity may cause the radiating antenna to transmit an interrogation/radiation signal out of one or more slots of a second section 186, which may cause any tag within a distance or signal strength threshold of the second section 186 to emit a tag response back to the second section 186. This process may continue for each of the remaining sections 180, 182, 188, 190, 192, and 194 of the radiating antennas. In response to the radiating antennas providing the spatially discretized signaling via the different sections 180, 182, 184, 186, 188, 190, 192, 194 at different times, the computing entity may then determine which sections 180, 182, 184, 186, 188, 190, 192, 194 have received a tag response back from the tag 105-1 associated with the asset 105 and subsequently, a location of the asset 105 in the interior housing 100 of the vehicle.

For example, if only a single section 184 has received a tag response back from the tag 105-1 associated with the asset 105, then the computing entity may detect (e.g., identify) that the location of the asset 105 is within a storage unit (e.g., shelf) 120 associated with the section 184. As an illustrative example, the computing entity may perform a lookup function on a data structure that maps the section 184 of the radiating antenna to its corresponding storage unit 120.

However, if more than one section 184, 186 has received a tag response back from the tag 105-1, then the computing entity may compare a characteristic of the tag responses for the different sections 184, 186 in determining the location of the asset 105. For example, the computing entity may compare the signal strength (e.g., RSSI values) for the different sections 184, 186. Here, the computing entity may determine that the tag 105-1 is more likely nearer to a first section 184 of the radiating antenna than a second section 186 of the radiating antenna because the tag response received by the first section 184 from the tag 105-1 has a higher signal strength than the tag response received by the second section 186 from the tag 105-1. As a result, the computing entity may determine that the asset 105 is more likely in the storage unit 120 corresponding to the first section 184 than the storage unit 122 corresponding to the second section 186. As noted, additionally, or alternatively, the computing entity may use other characteristics, such as phase angle, phase shift, etc. in detecting the location of the asset 105.

Additionally, or alternatively, the radiating antenna system may be configured to use reference tags 172, 174 to help triangulate a location of the tag 105-01 and/or identify a more refined location of the tag 105-1. Each of the reference tags 172, 174 may be associated with a specific area and/or location within the interior housing 100 of the vehicle. For example, two of the reference tags 172, 174 may be associated with a specific space within a storage unit 120 found within the interior housing 100 of the vehicle. In these embodiments, each of the sections 180, 182, 184, 186, 188, 190, 192, 194 may receive tag responses from any reference tag 172, 174 that is within a signal strength or communication range threshold of the respective section 180, 182, 184, 186, 188, 190, 192, 194, in addition to tag responses from the tag 105-1 coupled to the asset 105. Accordingly, the computing entity may use the tag responses from the reference tags 172, 174 in combination with responses from the tag 105-1 coupled to the asset 105, in detecting a more refined location of the asset 105.

For example, the computing entity may cause the radiating antenna to transmit (i.e., radiate) an interrogation signal from a first section 184 of the radiating antenna. In response, the radiating antenna may receive a first tag response from the tag 105-1 associated with the asset 105 that includes its tag identifier (and/or other tag data) at a first signal strength value. In addition, the radiating antenna my receive a second tag response from a first reference tag 172 that includes its tag identifier at a second signal strength value. Further, the radiating antenna may receive a third tag response from a second reference tag 174 that is located further away from the tag 150-1 relative to the first reference tag 172 that includes its tag identifier at a third signal strength value.

The computing entity may determine that the asset tag 105-1 is likely closer to the first reference tag 172 than the second references tag 174 based at least in part on the first and second signal strength values being within a threshold (e.g., within 3 RSSI values) of each other or otherwise sharing similar signal strength characteristics relative to the first and third signal strength values. The computing entity may determine a more refined location of the asset 105 within the storage unit 120 associated with the first section 184. For example, the computing entity may perform a lookup function on a data structure that maps the first reference tag 172 to a corresponding location within the storage unit 120 associated with the first section 184.

In particular embodiments, once the radiating antenna system has determined a location of the asset 105, the computing entity may transmit a control signal to a source such as a lighting device 140 associated with the storage unit 120, or specific space within the storage unit 120, to cause the lighting device 140 to emit light, as illustrated in FIG. 1. For example, the computing entity may perform a lookup function on a data structure that maps each lighting device 140, 142, 144, 147, 148, 149 to a storage unit 120, 122, 124, 126, 128, 130, or specific space within a storage unit 120, 122, 124, 126, 128, 130, so that the computing entity can identify the appropriate lighting device 140 and cause a control signal to be sent to the appropriate lighting device 140. As a result, the driver sees that only the lighting device 140 for the storage unit 120, or specific space thereof, where the asset 105 is located is emitting light, while no other lighting devices 142, 144, 147, 148, 149 are emitting light. In this way, the driver can quickly locate the asset 105 within the interior housing 100 of the vehicle.

It is understood that the interior housing 100 of the vehicle may contain multiple assets and each section 180, 182, 184, 186, 188, 190, 192, 194 of the radiating antennas may simultaneously be reading tags associated with various assets and/or reference tags 172, 174. In some embodiments, the computing entity may detect a location of a specific tag based at least in part on a request to locate an asset associated with the specific tag. For example, a delivery driver may request, via a handheld device, to find package Z. Responsive to the request, the computing entity may cause the various sections 180, 182, 184, 186, 188, 190, 192, 194 of the radiating antennas to transmit an interrogation/radiation signal at different times as described herein. In response to the radiating antennas providing the spatially discretized signaling via the different sections 180, 182, 184, 186, 188, 190, 192, 194 at different times, the computing entity may receive tag responses that include tag identifiers or other identifying data from corresponding tags. The computing entity may perform a lookup function on a data structure (e.g., a hash map), which maps tag identifiers or data received in tag responses to corresponding packages, to identify tag responses received from package Z. In turn, the computing entity may identify a location of package Z as described herein, and cause a corresponding lighting device 140, 142, 144, 147, 148, 149 to be illuminated so that the driver can locate package Z in the interior housing 100 of the vehicle.

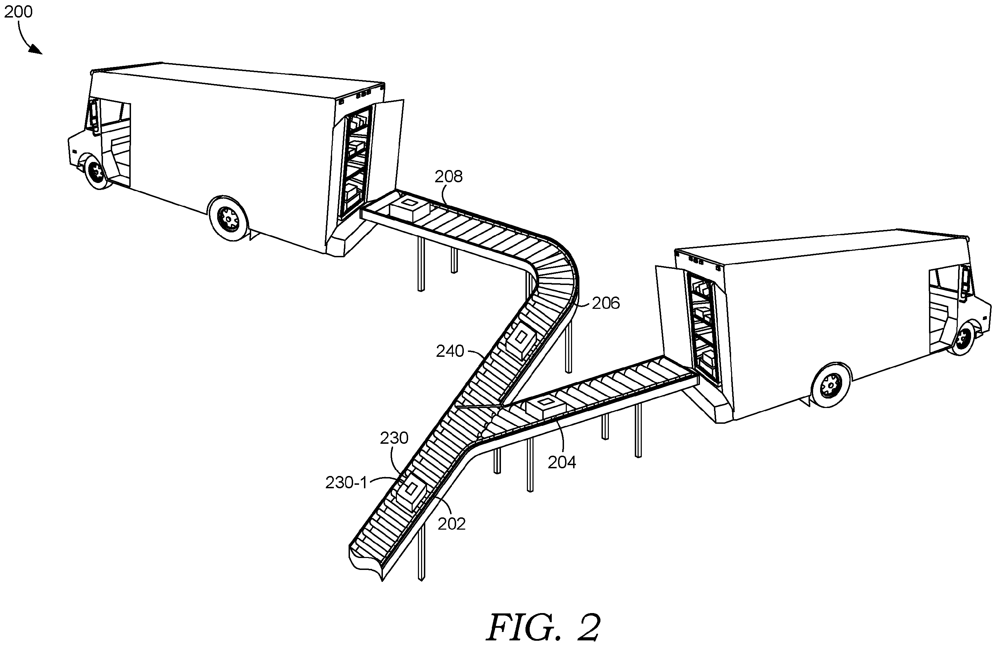

FIG. 2 is a schematic diagram of a sorting facility (e.g., a shipping hub) 200, illustrating an example of using a radiating antenna that provides spatially discretized signaling to guide sorting personnel to a location of a particular asset according to various embodiments. Here, an asset detection system again includes a reader (not pictured) and a radiating antenna in the form of a cable that is provided along a conveyor belt assembly 240. For example, the different sections 202, 204, 206, 208 of the radiating antenna may be attached to a respective area of the conveyor belt assembly 240. The asset detection system also includes a computing entity (not pictured) for performing logic. For example, the computing entity may be considered the reader, or part thereof, or may be separate from the reader and reside either locally (e.g., within) or remotely from the sorting facility 200.

In various embodiments, the radiating antenna is configured to radiate a signal from the various sections 202, 204, 206, 208 of the radiating antenna at different times to triangulate or detect a tag 230-1 associated with an asset 230 (e.g., package) that is traveling on the conveyor belt assembly 240. Accordingly, each section 202, 204, 206, 208 radiates (and/or receives) data at different times according to any suitable algorithm.

For example, the computing entity may cause the radiating antenna to transmit an interrogation/radiation signal out of one or more slots of a first section 202 of the radiating antenna at a first time, which may cause any tag within a distance or signal strength threshold of the first section 202 to emit a tag response back to the first section 202. At a second time, subsequent to the first time, the computing entity may cause the radiating antenna to transmit an interrogation/radiation signal out of one or more slots of a second section 204, which may cause any tag within a distance or signal strength threshold of the second section 204 to emit a tag response back to second section 204. This process may continue for each of the remaining sections 206, 208. In response to the radiating antenna providing the spatially discretized signaling via the different sections 202, 204, 206, 208 at different times, the computing entity may determine which sections 202, 204, 206, 208 have received a tag response from the tag 230-1 associated with the asset 230 and subsequently, a location of the asset 230 on the conveyor belt assembly 240.

For example, if only a single section 202 has received a tag response from the tag 230-1, then the computing entity may detect the location of the asset 230 as being within an area of the conveyor belt assembly 240 corresponding to the section 202. However, if more than one section 202, 204 has received a tag response from the tag 230-1, then the computing entity may compare a characteristic, such as the signal strength (e.g., RSSI values), included in the tag responses received from the respective sections 202, 204 and the tag 230-1 to detect the location of the asset 230 as being within an area of the conveyor belt assembly 240 corresponding to the section 202 with the highest signal strength.

### III. A First Configuration of a Radiating Antenna that Provides Spatially Discretized Signaling

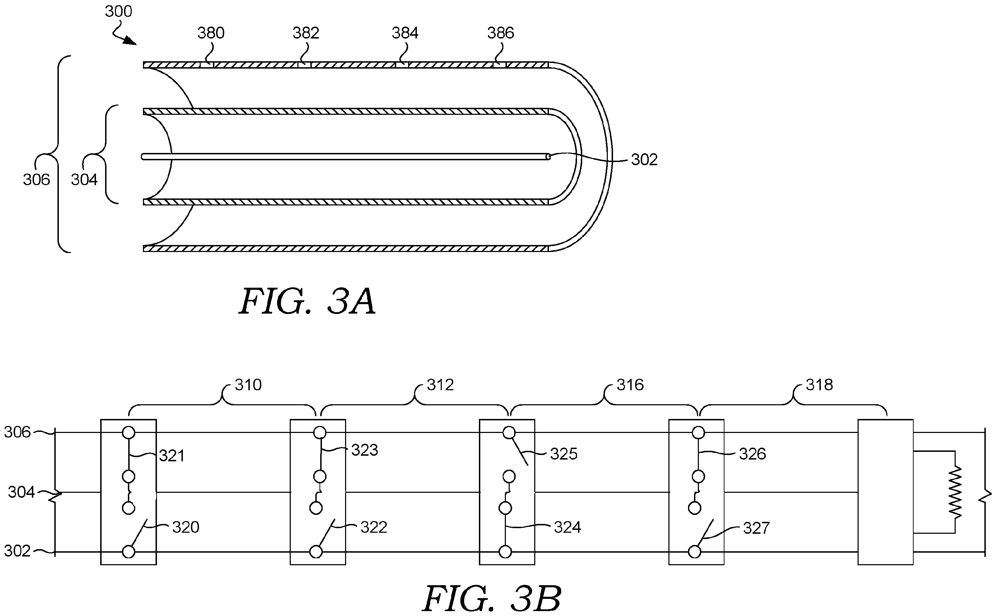

FIG. 3A is a schematic view illustrating a first configuration of a radiating antenna that provides spatially discretized signaling according to various embodiments. In FIG. 3A, the radiating antenna is in the form of a triaxial cable 300 having three different conductors 302, 304, 306. However, in various embodiments, the assembly of conductors 302, 304, 306 making up the antenna may not be in the form of a cable 300. For example, the assembly of conductors 302, 304, 306 may be in the form of a pipe, tube, or some other type of cylindrical or non-cylindrical structure. In addition, the assembly of conductors 302, 304, 306 making us the antenna may be flexible or rigid.

The conductors 302, 304, 306 may be used as shields or as signal conductors depending on the current operation of the radiating antenna. The inner conductor 302 is the most central conductor relative to the other conductors 304, 306. The middle conductor 304 is situated over or surrounds the inner conductor 302 and is beneath the outer conductor 306. The outer conductor 306 is situated over both the middle conductor 304 and the inner conductor 302 and serves as the outermost layer that is exposed to an environment. The outer conductor 306 contains slots (e.g., apertures or slits) 380, 382, 384, 386 that are configured to allow a signal to radiate or leak out of the outer conductor 306, and thus transmit a signal into the environment in search of a tag response.

FIG. 3B is a schematic diagram illustrating how the radiating antenna radiates a signal according to various embodiments. Specifically, FIG. 3B demonstrates switching logic that can be used in various embodiments to operate a plurality of switches to cause the middle conductor 304 to act as a ground (where all the RF signal generated by the inner conductor 302 is sunk by the middle conductor 304), referred to as operating in a "pass" mode. In addition, FIG. 3B demonstrates switching logic that can be used in various embodiments to operate the plurality of switches to cause the middle conductor 304 to act as a carrier for the signal that the inner conductor 302 is carrying, which causes at least a portion of the signal to radiate or leak through the outer conductor 306 via one or more of the slots 380, 382, 384, 386, referred to as operating in a "transmit" mode. Accordingly, when the middle conductor 304 is grounded and operating in the "pass" mode and only the inner conductor 302 is carrying the signal, then no radiation or leakage of the signal occurs through the outer conductor 306.

The outer conductor 306 is partitioned into different sections 310, 312, 316, 318 (i.e., the areas between the switches). Each of the sections 310, 312, 316, 318 may correspond to a different predefined reading zone or other real-world area. For example, the first section 310 may correspond to the first section 184 of the radiating antenna shown in FIG. 1 and the second section 312 may correspond to the second section 186 of the radiating antenna shown in FIG. 1.

FIG. 3B specifically illustrates the signal being radiated from the third section 316 of the radiating antenna, while the signal is not radiating from the first section 310, the second section 312, and the fourth section 318. Starting from left to right, the inner conductor 302 serves as the default conductor in that the inner conductor 302 carries the signal through the first section 310 and the second section 312 due to a first switch 320 that lies at the beginning of the first section 310 and a second switch 322 that lies at the beginning of the second section 312 being open.

Meanwhile, the outer conductor 306 is connected to the middle conductor 304, serving as a ground, via a third switch 321 that lies at the beginning of the first section 310 and a fourth switch 323 that lies at the beginning of the second section 312. Because the third switch 321 and the fourth switch 323 are closed, the middle conductor 304 acts as a shield in further preventing, along with the first switch 320 and the second switch 322 being open, the signal from radiating out the first section 310 and the second section 312.

When the signal travels along the inner conductor 302 and arrives at a fifth switch 324 that lies at the beginning of the third section 316, the signal travels up to the middle conductor 304 because the inner and middle conductors 302, 304 are connected via the fifth switch 324 being closed and a sixth switch 325 that lies at the beginning of the four section 318 being open. Because the signal is now being carried in the middle conductor 304 in the third section 316, at least a portion of the signal radiates out through one or more of the slots in the outer conductor 306 that lie in the third section 316. However, the signal does not radiate out the first section 310 and the second section 312.

When the signal travels along the middle conductor 304 and arrives at a seventh switch 326 and an eighth switch 327 that lies at the beginning of the fourth section 318, the signal is no longer radiated out because the middle and outer conductors 304, 306 are connected via the seventh switch 326 being closed, the eighth switch 327 being closed, and the signal traveling along the outer conductor 306.

Various embodiments of the switch logic may involve selectively reading or transmitting the signal while passing on others. For example, the switching logic may initially set the third section 316 to a "transmit" mode (e.g., reads or transmits a leaky signal) and the other sections 310, 312, 318 to a "pass" mode (e.g., does not read or transmit a leaky signal). The switching logic may then responsively set a different section 318 to a "transmit" mode and the other sections 310, 312, 316 to a "pass" mode. Such functionality can occur until each section 310, 312, 316, 318 transmits/leaks the signal and/or reads tag responses.

In some embodiments, only one section 316 may be reading/transmitting at a time such that all the other sections 310, 312, 318 are closed. In other embodiments, two or more sections 310, 312, 316, 318 may be reading/transmitting at a time (e.g., are in a "transmit" mode in parallel). The switching logic may place any section 310, 312, 316, 318 in a "transmit" mode according to any suitable algorithm in sequence. For example, the "transmit" functionality can occur in order or sequentially, from the first section 310 to the second section 312, then to the third section 316, and so on. However, the "transmit" functionality can occur out of order, such as the second section 312 at a first time, the first section 310 at a second time, subsequent to the first time, the third section 316 at a third time, subsequent to the second time, and so on.

In various embodiments, different architectures/types of signal switching mechanisms can be installed between each of the sections 310, 312, 316, 318 to open and close the switches 320, 321, 322, 323, 324, 325, 326, 327 and enable switching the sections 310, 312, 316, 318 between "transmit" and "pass" modes. In some embodiments, the conductors 302, 304, 306 may be used to carry signals to the switches 320, 321, 322, 323, 324, 328, 332 to control them. For example, a communications protocol such as 1-Wire or SDI-12, and/or the like may be used to send digital communications over the one or more of the conductors 302, 304, 206 to control the switches 320, 321, 322, 323, 324, 328, 332. As another example, non-radio frequency band (e.g., low-frequency digital) signals may be sent over the outer conductor 306 and the inner conductor 302 using a 2-wire protocol to control the switches 320, 321, 322, 323, 324, 328, 332. In addition, capacitive energy storage at each switch may be used to power the reading circuitry.

In other embodiments, an external, wireless communication protocol may be used to carry signals to the switches 320, 321, 322, 323, 324, 328, 332 to control them. For example, Bluetooth, Zigbee, and/or the like may be used in configuring the switches 320, 321, 322, 323, 324, 328, 332. In these embodiments, the conductors 302, 304, 306 may be used in providing power and ground to the switches during operation.

In other embodiments, a switching mechanism may be used that includes elements that enable the switching mechanism to be "snapped on" or "crimped on" to a continuous length of the antenna. The switching mechanism may separate a single section of the antenna into two distinct, individually addressable sections of the antenna. In addition, the switching mechanism may automatically connect to all conductors in each section of the antenna. Further, the switching mechanism may connect the conductors to the switching mechanism electronics.

### IV. A Second Configuration of a Radiating Antenna that Provides Spatially Discretized Signaling

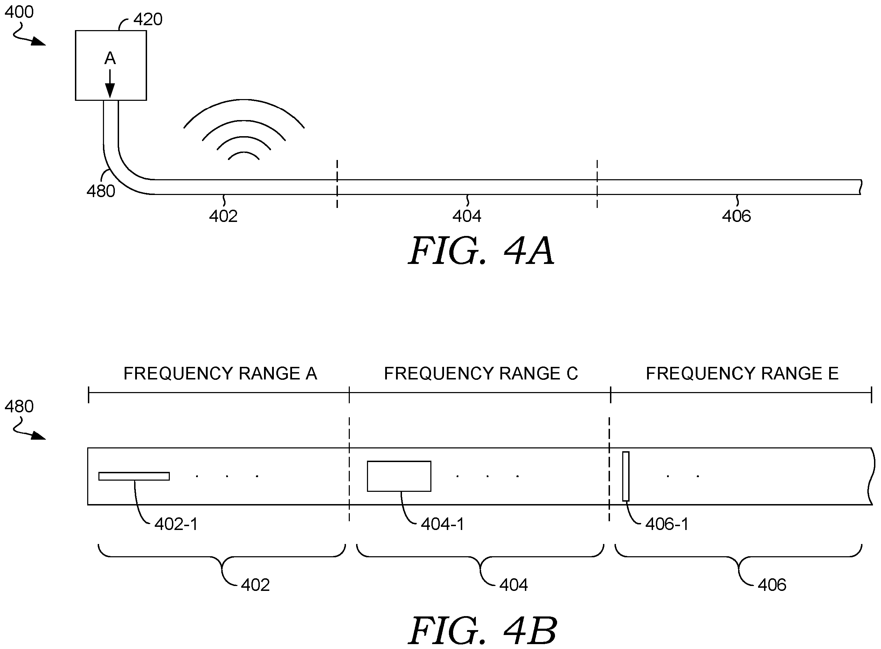

FIG. 4A is a schematic diagram of a radiating antenna system 400 that includes a second configuration of a radiating antenna 480 that provides spatially discretized signaling according to various embodiments. The radiating antenna system 400 includes a reader 420, which is connected to the radiating antenna 480 (e.g., a coaxial cable) that includes a first section 402, a second section 404, and a third section 406. For this configuration of the radiating antenna 480, each section 402, 404, 406 includes specifically (e.g., uniquely) tuned or shaped slots (e.g., apertures or slits) that correspond to a specific signal frequency. For example, turning to FIG. 4B, each section 402, 404, 406 of the radiating antenna 480 includes one or more specifically shaped respective slots 402-1, 404-1, 406-1. The slot(s) 402-1 for the first section 402 are configured to radiate frequency range A. The slot(s) 404-1 for the second section 404 are configured to radiate frequency range C. The slot(s) 406-1 for the third section 406 are configured to radiate frequency range E.

The reader 420 (a computer processor thereof) may transmit a control signal to the radiating antenna 480 to request that the radiating antenna 480 produce a signal having frequency range A (e.g., a specific channel). Responsively, the entirety of the first section 402 radiates signal frequency A, while the other two sections 404, 406 refrain from radiating signal frequency A, since their corresponding slots 404-1, 406-1 are configured to radiate different frequencies. The reader 420 is also configured to receive tag responses from tags through the slot(s) 402-1, 404-1, and 406-1.

In some embodiments, each section 402, 404, 406 is defined by a respective connector (e.g., a coaxial connector). For example, a first connector may couple the first and second sections 402, 404 between the sections 402, 404 at a first end, and a second connector may couple the second and third sections 404, 406 between the sections 404, 406 at a second end. The radiating antenna 480 may be constructed using 3 to N types of cable, which corresponds to the number of frequency ranges needed. For example, the radiating antenna 480 may be constructed using a first cable that can produce leaky transmissions at frequency range A, a second cable that can produce leaky transmissions at frequency range C, and a third cable that can produce leaky transmissions at a frequency range E. Each section 402, 404, 406 of the radiating antenna 480 may be cut to the desired length specific to the desired use case and connected at the cable ends via a coaxial cable.

In other embodiments, each section 402, 404, 406 is not defined by connectors, but is instead defined by its shaped slot(s) 402-1, 404-1, 406-1. In these embodiments, different types of cable and connectors connecting the cable ends may not be needed. Rather, one single cable with differently etched slot(s) 402-1, 404-1, 406-1 at different positions along its length may be used.

In various embodiments, the field or signal strength intensity and/or orientation may be controlled by the slot size orientation along the section 402, 404, 406 and the number of slot(s). The more slot(s) in a section 402, 404, 406, the stronger the field is for the section 402, 404, 406. In some embodiments, each slot 402-1, 404-1, 406-1 is coupled to or covered by a corresponding resonator. For example, each slot 402-1, 404-1, 406-1 may be covered by a resonator that is a uniquely shaped piece of metal (or other conductor) that is attached on heat-shrink tubing over the slot 402-1, 404-1, 406-1. In some embodiments, a capacitive connection is formed when a slot 402-1, 404-1, 406-1 is cut to an outer conductor and a resonator (e.g., piece of metal) is brought close to it. Slot size and/or shape typically affects the coupling power to the resonator as well as the specific resonating frequency.

A resonator's purpose is to couple the energy from the radiating antenna to its resonance field (i.e., the frequency range) and then radiate the energy as the electric and magnetic field (E- and H-field) components and reshape the resultant fields of the resonator. Coupling resonators to slots 402-1, 404-1, 406-1 increases the field strength of the emitted fields. Accordingly, the shape of the resultant fields depends on the number of slots and resonators and their proximity to each other. In some embodiments, the radiating antenna includes an inner conductor, a dielectric, an outer conductor, and a jacket as a coaxial cable.

### V. Mapping Example

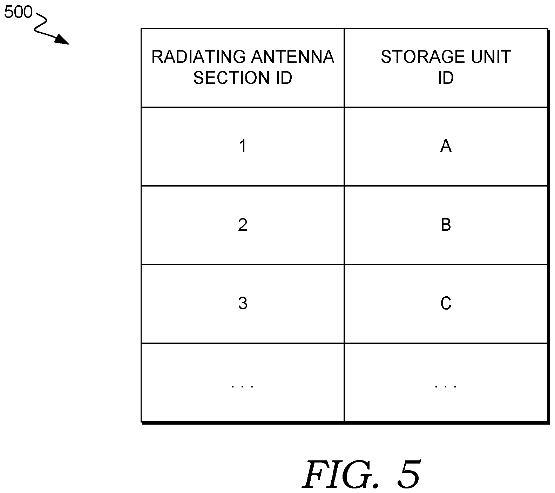

FIG. 5 is a table 500 illustrating an example mapping of radiating antenna section identifiers (IDs) to corresponding storage unit identifiers (IDs). In some embodiments, the table 500 represents one or more data structures used to associate each section to a respective geographical area or location (e.g., a storage unit) in a geographical environment. For example, referring to FIG. 1, upon the first section 184 receiving data from the tag 105-1 associated with the asset 105, a reader (not shown) may transmit the tag data and radiating antenna section ID (i.e., indicating which section received the tag data) over a network to a computing entity that may use a request handler to place this data in a queue. Additionally, or alternatively, the computing entity may use the radiating antenna section ID as a key to search for the corresponding storage unit ID within the table 500 and identify the location of the asset 105. For example, the computing entity may have received radiating antenna section ID 1 and matched the ID to the first entry or record within the table 500 and storage unit ID A. As a result, the computing entity may detect that the location of the asset 105 is storage unit A. Similar types of data structures (e.g., tables) may be used in mapping tag identifiers (IDs) to corresponding asset identifiers (IDs) and/or mapping reference tag identifiers (IDs) to corresponding storage unit identifiers (IDs) and/or specific locations at corresponding storage unit identifiers (IDs).

### VI. Example System Operation

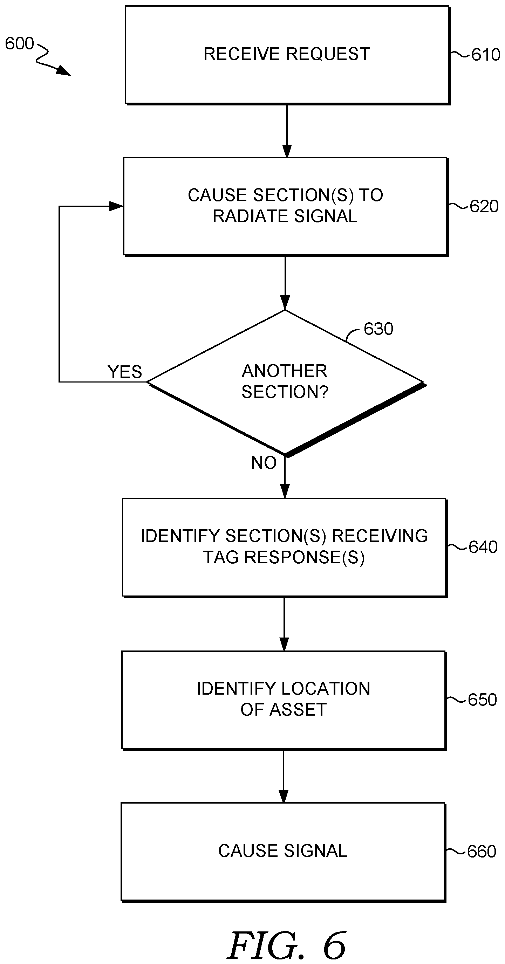

FIG. 6 is a flow diagram of an example process 600 for identifying a location of an asset according to various embodiments. For instance, the flow diagram shown in FIG. 6 may correspond to operations carried out, for example, by a computing entity as described herein, as the computing entity performs the process 600.

Depending on the embodiment, the process 600 (and/or any of the functionality described herein) may be performed by processing logic that comprises hardware (e.g., circuitry, dedicated logic, programmable logic, microcode, etc.), software (e.g., instructions run on a processor to perform hardware simulation), firmware, or a combination thereof. Although the operations of the process 600 are described in a particular order, it is understood that certain operations may occur substantially parallel with or before or after other operations. Further, more (or fewer) operations may exist than illustrated. Added operations may include operations that embody any functionality described herein (e.g., as described with respect to FIGS. 1-5).

At Operation 610, the process 600 involves the computing entity receiving a request to identify a location of an asset in an environment. For example, the process 600 may be performed to identify the location of an asset, such as a package, in the cargo area of a delivery vehicle. A radiating antenna system may have been installed within the vehicle with a radiating antenna installed within the cargo area. Accordingly, the radiating antenna may be configured as described herein, with the antenna partitioned into sections that have been mapped to various locations within the cargo area. In addition, the radiating antenna system may include a reader that is configured to cause the sections of the radiating antenna to radiate an interrogation signal and to collect tag responses received by the sections of the radiating antenna from tags associated with (e.g., coupled to) assets that respond to the interrogation signal.

Further, the radiating antenna system may include the computing entity that controls the functionality of the radiating antenna system and performs the process 600. Delivery personnel (e.g., a driver of the vehicle) may have stopped along his or her route to deliver a package that is in the cargo area of the vehicle. The delivery personnel may have selected an identifier for the package on a handheld device being used by the personnel and in turn, the handheld device may have communicated the identifier in a request for the package over a wireless network to the computing entity.

The process 600 continues with performing an iterative process to cause an interrogation signal to radiate out of each section of the radiating antenna. Here, an iteration may involve the computing entity causing an interrogation signal to radiate out of one or more of the sections of the radiating antenna at Operation 620, without radiating out of the remaining sections of the radiating antenna. For example, the radiating antenna may be in the form of a triaxial cable 300 having three different conductors 302, 304, 306. The computing entity may control switching logic that causes one or more switches to open and/or close to place one or more of the sections of the radiating antenna into a "transmit" mode, while placing the remaining sections of the radiating antenna into a "pass" mode.

As another example, the sections of the radiating antenna may include specifically tuned or shaped slots (e.g., apertures or slits) that correspond to specific signal frequencies. The computing entity may request the radiating antenna to produce a signal having a certain frequency that one or more of the sections of the radiating antenna have slots that are turned to the certain frequency. In various embodiments, the radiating antenna is configured to carry the signal in an X-axis orientation or parallel/along the length of the antenna. Accordingly, the signal may radiate in the X-axis orientation, and then in a general Y-axis or cross-sectional orientation substantially perpendicular to the length of the radiating antenna and out of the slots for the corresponding sections.

Accordingly, the radiating antenna system receives tag responses from tags that are coupled to assets and are within a distance or signal strength threshold of the one or more sections of the radiating antenna that are radiating the interrogation signal. For example, the reader may receive tag responses from tags coupled to assets via the slots of the one or more sections emitting the interrogation signal. In turn, the reader may forward the responses to the computing entity.

In some embodiments, the tags are passive in that the tags send the tag responses based at least in part on receiving the interrogation signal. For example, when a tag is activated via the interrogation signal, the tag responds back with its identifier and/or other data that is unique to the tag. Alternatively, the tags are active tags that send the tag responses without having to be interrogated. For example, a tag may have its own power source to allow the tag to broadcast responses with its identifier and/or other data that is unique to the tag without an interrogation signal. Therefore, in some embodiments, the radiating antenna system need not cause an interrogation signal to radiate out of the one or more sections. In these embodiments, each section of the antenna may be tuned to certain frequencies or switching logic that may open different sections to receive certain signals (responses) from the tags.

At Operation 630, the computing entity determines whether another section of the radiating antenna needs to radiate the interrogation signal. For example, the computing entity may execute "transmit" functionality that involves having the sections of the radiating antenna radiate the interrogation signal in a certain order or sequence. Therefore, the computing entity may determine whether the order or sequence for having the sections of the radiating antenna radiate the interrogation signal has completed. If not, then the computing entity may return to Operation 620 to perform another iteration and cause the interrogation signal to radiate out of one or more additional sections of the radiating antenna.

If no other sections of the radiating antenna need to radiate the interrogation signal, then the computing entity identifies the sections of the radiating antenna that received a tag response from the tag associated with the asset that is being located at Operation 640. For example, the computing entity may use some type of data structure (e.g., one or more tables) that maps tag identifiers, and corresponding tags. Accordingly, the computing entity may filter the tag responses to identify those responses that were received from the tag associated with the asset that is to be located. The computing entity may then determine which sections of the radiating antenna received the tag responses sent by the tag associated with the asset that is to be located.

At Operation 650, the computing entity identifies a location for the asset. In some embodiments, the computing entity may initially determine whether more than one section of the radiating antenna received a tag response from the tag associated with the asset. If only a single section of the radiating antenna received a tag response from the tag, then the computing entity identifies the location of the asset as the location of the cargo area that is associated with the section of the radiating antenna. For example, the computing entity may perform a lookup function on a data structure using an identifier for the section of the radiating antenna that received the tag response to identify the location of the cargo area that is associated with the section of the radiating antenna.

However, if more than one section received tag responses from the tag, then the computing entity may perform additional functionality in identifying the location of the asset in the cargo area. For example, the computing entity may compare signal strength values of those sections that received the tag responses from the tag. In some embodiments, the computing entity may determine whether the signal strength values satisfy a threshold with respect to each other. For example, the computing entity may determine whether the signal strength values are within 5 dBM of each other, 10 dBM of each other, and/or the like.

If the signal strength values do not satisfy a threshold of each other, then the computing entity may identify the location of the asset based at least in part on the tag response providing the highest signal strength value. For example, a first section of the radiating antenna may have received a tag response from the tag at 30 dBM. A second section of the radiating antenna may have received a tag response from the tag at 70 dBM. The computing entity may determine that the values do not satisfy the threshold because the difference between the two values is greater than 5 dBM. Accordingly, the computing entity may determine the tag, and corresponding asset, is closer to the first section than the second section because the first section has the higher signal strength value of 30 dBM over the second section's value of 70 dBM.

If the signal strength values do satisfy a threshold with respect to each other, then the computing entity may compare other signal characteristics of the tag responses to detect the location of the asset. For example, the computing entity may determine phase angle (angular displacement of a signal carrying the tag response) between the tag and a section of the radiating antenna, use reference tag readings as described herein, use additional sensors such as cameras that use object detection, lidar, radar, etc., and/or the like.

In some embodiments, the computing entity may generate an aggregate score of various signal characteristics to determine a location of the asset. For example, the computing entity may generate an aggregate score of two for a first section of the radiating antenna and zero for a second section of the radiating antenna because the signal strength for responses received from the tag by the first section is higher than responses received from tag by the second section, as well as the responses received from the tag have closer characteristics to responses received from a reference tag in the first section than responses received from a reference tag in the second section. Accordingly, because two is greater than zero, the computing entity may determine the asset is in the location associated with the first section.

At Operation 660, the computing entity causes some type of signaling to identify the location of the asset in the cargo area of the vehicle. For example, the computing entity may transmit a control signal to a source such as a lighting device associated with the location to cause the lighting device to emit light. As a result, the delivery personnel sees that only the lighting device for the location where the asset is located is emitting light, while no other lighting devices are emitting light. Additionally, or alternatively, the computing entity may have a notification and/or instructions sent to the delivery personnel's handheld device, such as step-by-step instructions or a map on where to go in the cargo area to retrieve the asset. In this way, the deliver personnel can quickly locate the asset within the cargo area of the vehicle.

### VII. Apparatuses, Methods, and Systems

Embodiments of the present disclosure may be implemented in various ways, including as apparatuses that comprise articles of manufacture. An apparatus or system may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, program code, and/or similar terms used herein interchangeably). Such non-transitory computer-readable storage media include all computer-readable media (including volatile and non-volatile media), excluding any transitory medium.

In various embodiments, a non-volatile computer-readable storage medium may include a floppy disk, flexible disk, hard disk, solid-state storage (SSS) (e.g., a solid state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In various embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double information/data rate synchronous dynamic random access memory (DDR SDRAM), double information/data rate type two synchronous dynamic random access memory (DDR2 SDRAM), double information/data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices/entities, computing entities, and/or the like. As such, embodiments of the present disclosure may take the form of an apparatus, system, computing device, computing entity, and/or the like executing instructions stored on a computer-readable storage medium to perform certain steps or operations. However, embodiments of the present disclosure may also take the form of an entirely hardware embodiment performing certain steps or operations.

Embodiments of the present disclosure are described above with reference to block diagrams and flowchart illustrations. Thus, it should be understood that each block/operation of the block diagrams and flowchart illustrations may be implemented in the form of a computer program product, an entirely hardware embodiment, a combination of hardware and computer program products, and/or apparatus, systems, computing devices/entities, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

### VIII. Example Computing Environment

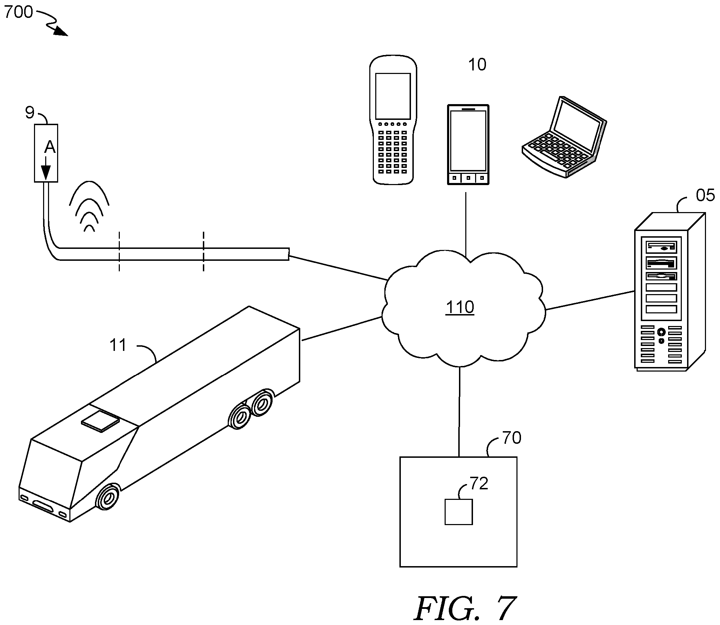

FIG. 7 is a schematic diagram of an example computing environment 700 in which aspects of the present disclosure operate according to various embodiments. The computing environment 700 includes one or more computing entities 05, one or more tags 72 associated with (e.g., coupled to) one or more assets 70, one or more source computing entities 10 such as a mobile device, tablets, mobile phone, and/or the like, a radiating antenna assembly 9 that includes a radiating antenna and a reader, and one or more vehicles 11, each of which is communicatively coupled via one or more networks 110.

Accordingly, two or more of the components, entities, devices, systems, and similar words used herein interchangeably (a.k.a., components) of the computing environment 700 can exchange data between each other via a wired (e.g., Ethernet or fiber-optic medium connected in a LAN) or wireless (e.g., IEEE 802.15.4) computer protocol network. In addition, each of the components may be in direct or indirect communication with one another over, for example, the same or different wired and/or wireless networks. While FIG. 7 illustrates the various components as separate, standalone components, various embodiments of the disclosure are not limited to this particular architecture. Some embodiments of the disclosure may involve more or fewer (or combined) components than those illustrated in the environment 700 shown in FIG. 7.

In various embodiments, components of the environment 700 may represent corresponding components as described herein. For example, the one or more computing entities 05 may represents the computing entity as described herein that performs the process 600 of FIG. 6. The one or more computing entities 05, along with the radiating antenna assembly 9, may be part of a radiating antenna system configured for detecting tags 72 associated with assets 70 to identify locations of the assets 70 as described herein. For example, the radiating antenna system may be configured for identifying locations of assets 70 in a cargo area of a vehicle 11. The radiating antenna assembly 9 may be installed within the interior of the cargo area of the vehicle 11. In addition, the one or more computing entities 05 may be installed locally within the vehicle 11 or remotely from the vehicle 11. Further, the one or more source computing entities 10 may be handheld devices used by delivery personnel as described herein.

In various embodiments, the network(s) 110 represents or includes an IoT (internet of things) or IoE (internet of everything) network, which is a network of interconnected items (e.g., asset 70, and the vehicle 11) that are each provided with unique identifiers (e.g., UIDs) and computing logic to communicate or transfer data with each other or other components. Such communication can happen without requiring human-to-human or human-to-computer interaction. For example, an IoT network may include a source computing entity 10 that includes an application, which sends a request, via the network(s) 110, to at least one of the one or more computing entities 05 to determine or predict where an asset 70 is located. Responsively, the radiating antenna assembly 9 and/or reference tags within the vehicle 11 may help generate sensor data so that the computing entity 05 can analyze the data, as described herein.

The tag 72 is generally responsible for indicating or emitting/transmitting data (e.g., to the radiating antenna assemblies 9 within the vehicle 11), such as an identifier that identifies a respective tag 72, which can be used to predict the location of the tag 72 (or more generally the asset 70), as described herein. A tag 72 is typically attached or otherwise coupled to a target asset 70, which may need to be loaded in a particular vehicle 11. The tag 72 may be or include any suitable tag, machine, manufacture, module, and/or computer-readable indicia. "Computer-readable indicia" as described herein is any tag (e.g., RFID or NFC tag) information, bar code, data matrix, numbers, lines, shapes, and/or other suitable identifier that is machine-readable (and tend not to be readable by a human) because machines can process the data. For example, the target tag 72 can be a Radio Frequency Identification (RFID) tag (active or passive), Near-field Communication (NFC) tag, optical computer-readable indicia, bar code computer-readable indicia, magnetic ink character recognition computer-readable indicia, beacon, and/or the like.

### IX. Example Computing Entity

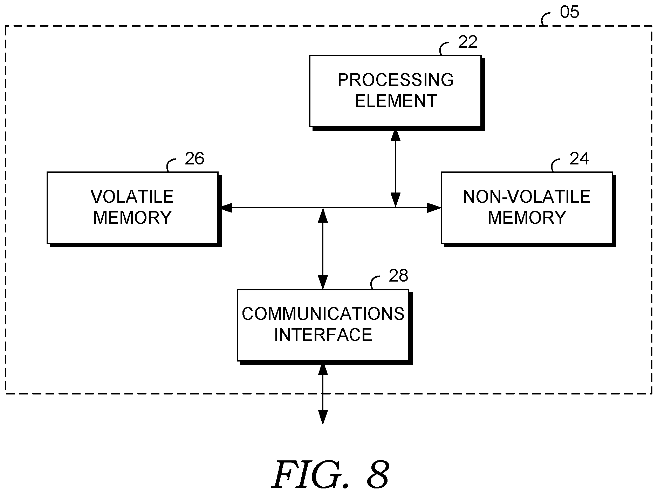

FIG. 8 is a block diagram of a computing entity 05 described in FIG. 7 according to various embodiments of the present disclosure. In general, the terms computing entity, computer, entity, device, system, and/or similar words used herein interchangeably may refer to, for example, one or more computers, computing entities, desktops, mobile phones, tablets, phablets, notebooks, laptops, distributed systems, consoles input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In particular embodiments, these functions, operations, and/or processes can be performed on data, content, information/data, and/or similar terms used herein interchangeably.

In various embodiments, the computing entity 05 may include one or more communications interfaces 28 for communicating with various computing entities, such as by communicating data, content, information/data, and/or similar terms used herein interchangeably that can be transmitted, received, operated on, processed, displayed, stored, and/or the like.

As shown in FIG. 8, the computing entity 05 may include or be in communication with one or more processing elements 22 (also referred to as processors, computer processors, processing circuitry, and/or similar terms used herein interchangeably) that communicate with other elements within the computing entity 05 via a bus, for example. As will be understood, the processing element 22 may be embodied in a number of different ways. For example, the processing element 22 may be embodied as one or more complex programmable logic devices (CPLDs), microprocessors, multi-core processors, coprocessing entities, application-specific instruction-set processors (ASIPs), microcontrollers, and/or controllers. Further, the processing element 22 may be embodied as one or more other processing devices or circuitry. The term circuitry may refer to an entirely hardware embodiment or a combination of hardware and computer program products. Thus, the processing element 22 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processing element 22 may be configured for a particular use or configured to execute instructions stored in volatile or non-volatile media or otherwise accessible to the processing element 22. As such, whether configured by hardware or computer program products, or by a combination thereof, the processing element 22 may be capable of performing steps or operations according to embodiments of the present disclosure when configured accordingly.

In various embodiments, the computing entity 05 may further include or be in communication with non-volatile media (also referred to as non-volatile storage, memory, memory storage, memory circuitry and/or similar terms used herein interchangeably). In particular embodiments, the non-volatile storage or memory may include one or more non-volatile storage or memory media 22, including but not limited to hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. As will be recognized, the non-volatile storage or memory media may store databases (e.g., parcel/item/shipment database), database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or information/data that is stored in a computer-readable storage medium using one or more database models, such as a hierarchical database model, network model, relational model, entity-relationship model, object model, document model, semantic model, graph model, and/or the like.

In various embodiments, the computing entity 05 may further include or be in communication with volatile media (also referred to as volatile storage, memory, memory storage, memory circuitry and/or similar terms used herein interchangeably). In particular embodiments, the volatile storage or memory may also include one or more volatile storage or memory media 26, including but not limited to RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. As will be recognized, the volatile storage or memory media may be used to store at least portions of the databases, database instances, database management systems, data, applications, programs, program modules, scripts, source code, object code, byte code, compiled code, interpreted code, machine code, executable instructions, and/or the like being executed by, for example, the processing element 22. Thus, the databases, database instances, database management systems, data, applications, programs, program modules, scripts, source code, object code, byte code, compiled code, interpreted code, machine code, executable instructions, and/or the like may be used to control certain aspects of the operation of the computing entity 05 with the assistance of the processing element 22 and operating system.

In particular embodiments, the computing entity 05 may also include one or more communications interfaces 28 for communicating with various computing entities, such as by communicating information/data, content, information/data, and/or similar terms used herein interchangeably that can be transmitted, received, operated on, processed, displayed, stored, and/or the like. Such communication may be executed using a wired information/data transmission protocol, such as fiber distributed information/data interface (FDDI), digital subscriber line (DSL), Ethernet, asynchronous transfer mode (ATM), frame relay, information/data over cable service interface specification (DOCSIS), or any other wired transmission protocol. Similarly, the computing entity 05 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra wideband (UWB), infrared (IR) protocols, near field communication (NFC) protocols, Wibree, Bluetooth protocols, wireless universal serial bus (USB) protocols, long range low power (LoRa), LTE Cat M1, NarrowBand IoT (NB IoT), and/or any other wireless protocol.

Although not shown, the computing entity 05 may include or be in communication with one or more input elements, such as a keyboard input, a mouse input, a touch screen/display input, motion input, movement input, audio input, pointing device input, joystick input, keypad input, and/or the like. The computing entity 05 may also include or be in communication with one or more output elements (not shown), such as audio output, video output, screen/display output, motion output, movement output, and/or the like.

As will be appreciated, one or more of the computing entity's 05 components may be located remotely from other computing entity 05 components, such as in a distributed system. Furthermore, one or more of the components may be combined and additional components performing functions described herein may be included in the computing entity 05. Thus, the computing entity 05 can be adapted to accommodate a variety of needs and circumstances. As will be recognized, these architectures and descriptions are provided for exemplary purposes only and are not limiting to the various embodiments.

### X. Example Source Computing Entity

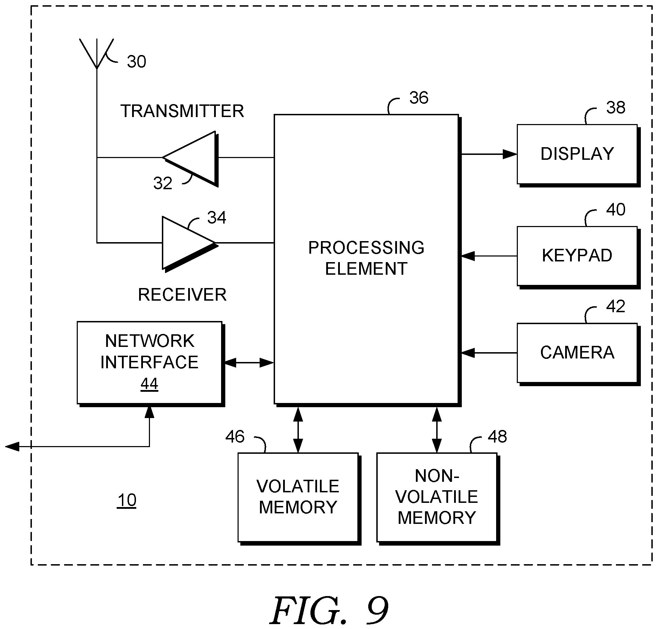

Turning now to FIG. 9, a block diagram of a source computing entity 10 of FIG. 7 according to various embodiments. In certain embodiments, source computing entity(s) 10 may be embodied as handheld computing entities, such as mobile phones, tablets, personal digital assistants, and/or the like, that may be operated at least in part based on user input received from a user via an input mechanism. Moreover, source computing entity(s) 10 may be embodied as onboard vehicle computing entities, such as central vehicle electronic control units (ECUs), onboard multimedia system, and/or the like that may be operated at least in part based on user input. Such onboard vehicle computing entities may be configured for autonomous and/or nearly autonomous operation however, as they may be embodied as onboard control systems for autonomous or semi-autonomous vehicles, such as unmanned aerial vehicles (UAVs), robots, and/or the like. As a specific example, source computing entity(s) 10 may be utilized as onboard controllers for UAVs configured for picking-up and/or delivering packages to various locations, and accordingly such source computing entity(s) 10 may be configured to monitor various inputs (e.g., from various sensors) and generated various outputs. It should be understood that various embodiments of the present disclosure may comprise a plurality of source computing entities 10 embodied in one or more forms (e.g., kiosks, mobile devices, watches, laptops, carrier personnel devices (e.g., Delivery Information Acquisition Devices (DIAD)), etc.).

As will be recognized, a user may be an individual, a family, a company, an organization, an entity, a department within an organization, a representative of an organization and/or person, and/or the like. In various embodiments, a user may operate a source computing entity 10 that may include one or more components that are functionally similar to those of the computing entity 05. This figure provides an illustrative schematic representative of a source computing entity(s) 10 that can be used in conjunction with embodiments of the present disclosure. In general, the terms device, system, source computing entity, user device, entity, and/or similar words used herein interchangeably may refer to, for example, one or more computers, computing entities, desktops, mobile phones, tablets, phablets, notebooks, laptops, distributed systems, vehicle multimedia systems, autonomous vehicle onboard control systems, watches, glasses, key fobs, radio frequency identification (RFID) tags, ear pieces, scanners, imaging devices/cameras (e.g., part of a multi-view image capture system), wristbands, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Source computing entity(s) 10 can be operated by various parties such as, for example, carrier personnel (sorters, loaders, delivery drivers, network administrators, and/or the like). As shown this figure, the source computing entity(s) 10 can include an antenna 30, a transmitter 32 (e.g., radio), a receiver 34 (e.g., radio), and a processing element 36 (e.g., CPLDs, microprocessors, multi-core processors, coprocessing entities, ASIPs, microcontrollers, and/or controllers) that provides signals to and receives signals from the transmitter 32 and receiver 34, respectively. In some embodiments, the source computing entity(s) 10 additionally includes other components not shown, such as a fingerprint reader, a printer, and/or the camera.

The signals provided to and received from the transmitter 32 and the receiver 34, respectively, may include signaling information in accordance with air interface standards of applicable wireless systems. In this regard, the source computing entity(s) 10 may be capable of operating with one or more air interface standards, communication protocols, modulation types, and access types. More particularly, the source computing entity(s) 10 may operate in accordance with any of a number of wireless communication standards and protocols, such as those described above with regard to the analysis computing entity(s) 05. In a particular embodiment, the source computing entity(s) 10 may operate in accordance with multiple wireless communication standards and protocols, such as UMTS, CDMA2000, 1xRTT, WCDMA, TD-SCDMA, LTE, E-UTRAN, EVDO, HSPA, HSDPA, Wi-Fi, Wi-Fi Direct, WiMAX, UWB, IR, NFC, Bluetooth, USB, and/or the like. Similarly, the source computing entity(s) 10 may operate in accordance with multiple wired communication standards and protocols, such as those described above with regard to the analysis computing entity(s) 05 via a network interface 44.

Via these communication standards and protocols, the source computing entity(s) 10 can communicate with various other entities using concepts such as Unstructured Supplementary Service information/data (USSD), Short Message Service (SMS), Multimedia Messaging Service (MMS), Dual-Tone Multi-Frequency Signaling (DTMF), and/or Subscriber Identity Module Dialer (SIM dialer). The source computing entity(s) 10 can also download changes, add-ons, and updates, for instance, to its firmware, software (e.g., including executable instructions, applications, program modules), and operating system.

According to various embodiments, the source computing entity(s) 10 may include location determining aspects, devices, modules, functionalities, and/or similar words used herein interchangeably. For example, the source computing entity(s) 10 may include outdoor positioning aspects, such as a location module adapted to acquire, for example, latitude, longitude, altitude, geocode, course, direction, heading, speed, universal time (UTC), date, and/or various other information/data. In particular embodiments, the location module can acquire information/data, sometimes known as ephemeris information/data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This information/data can be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information can be determined by triangulating the computing entity's 10 position in connection with a variety of other systems, including cellular towers, Wi-Fi access points, and/or the like. Similarly, the source computing entity(s) 10 may include indoor positioning aspects, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices/entities (e.g., smartphones, laptops) and/or the like. For instance, such technologies may include the iBeacons, Gimbal proximity beacons, Bluetooth Low Energy (BLE) transmitters, NFC transmitters, and/or the like. These indoor positioning aspects can be used in a variety of settings to determine the location of someone or something to within inches or centimeters.

The source computing entity(s) 10 may also comprise a user interface (that can include a display 38 coupled to a processing element 36) and/or a user input interface (coupled to a processing element 36). For example, the user interface may be a user application, browser, user interface, and/or similar words used herein interchangeably executing on and/or accessible via the source computing entity 10 to interact with and/or cause display of information from the computing entity 05, as described herein. The user input interface can comprise any of a number of devices or interfaces allowing the source computing entity(s) 10 to receive information/data, such as a keypad 40 (hard or soft), a touch display, voice/speech or motion interfaces, or other input device. In embodiments including a keypad 40, the keypad 40 can include (or cause display of) the conventional numeric (0-9) and related keys (#, *), and other keys used for operating the source computing entity(s) 10 and may include a full set of alphabetic keys or set of keys that may be activated to provide a full set of alphanumeric keys. In addition to providing input, the user input interface can be used, for example, to activate or deactivate certain functions, such as screen savers and/or sleep modes.

As shown in this figure, the source computing entity(s) 10 may also include a camera 42, imaging device, and/or similar words used herein interchangeably (e.g., still-image camera, video camera, IoT enabled camera, IoT module with a low resolution camera, a wireless enabled MCU, and/or the like) configured to capture images. The source computing entity(s) 10 may be configured to capture images via the camera 42, and to store those imaging devices/cameras locally, such as in the volatile memory 46 and/or non-volatile memory 48. As discussed herein, the source computing entity(s) 10 may be further configured to match the captured image data with relevant location and/or time information captured via the location determining aspects to provide contextual information/data, such as a time-stamp, date-stamp, location-stamp, and/or the like to the image data reflective of the time, date, and/or location at which the image data was captured via the camera 42. The contextual data may be stored as a portion of the image (such that a visual representation of the image data includes the contextual data) and/or may be stored as metadata associated with the image data that may be accessible to various computing entity(s) 10.

The source computing entity(s) 10 may include other input mechanisms, such as scanners (e.g., barcode scanners), microphones, accelerometers, RFID readers, and/or the like configured to capture and store various information types for the source computing entity(s) 10. For example, a scanner may be used to capture parcel/item/shipment information/data from an item indicator disposed on a surface of a shipment or other item. In certain embodiments, the source computing entity(s) 10 may be configured to associate any captured input information/data, for example, via the processing element 36. For example, scan data captured via a scanner may be associated with image data captured via the camera 42 such that the scan data is provided as contextual data associated with the image data.

The source computing entity(s) 10 can also include volatile storage or memory 46 and/or non-volatile storage or memory 48, which can be embedded and/or may be removable. For example, the non-volatile memory may be ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. The volatile memory may be RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. The volatile and non-volatile storage or memory can store databases, database instances, database management systems, information/data, applications, programs, program modules, scripts, source code, object code, byte code, compiled code, interpreted code, machine code, executable instructions, and/or the like to implement the functions of the source computing entity(s) 10. As indicated, this may include a user application that is resident on the entity or accessible through a browser or other user interface for communicating with the computing entity 05 and/or various other computing entities.

In another embodiment, the source computing entity(s) 10 may include one or more components or functionality that are the same or similar to those of the computing entity 05, as described in greater detail above. As will be recognized, these architectures and descriptions are provided for exemplary purposes only and are not limiting to the various embodiments.

### XI. Definitions

"And/or" is the inclusive disjunction, also known as the logical disjunction and commonly known as the "inclusive or." For example, the phrase "A, B, and/or C," means that at least one of A or B or C is true; and "A, B, and/or C" is only false if each of A and B and C is false.

A "set of' items means there exists one or more items; there must exist at least one item, but there can also be two, three, or more items. A "subset of" items means there exists one or more items within a grouping of items that contain a common characteristic.

A "plurality of' items means there exists more than one item; there must exist at least two items, but there can also be three, four, or more items.

"Includes" and any variants (e.g., including, include, etc.) means, unless explicitly noted otherwise, "includes, but is not necessarily limited to."

A "user" or a "subscriber" includes, but is not necessarily limited to: (i) a single individual human; (ii) an artificial intelligence entity with sufficient intelligence to act in the place of a single individual human or more than one human; (iii) a business entity for which actions are being taken by a single individual human or more than one human; and/or (iv) a combination of any one or more related "users" or "subscribers" acting as a single "user" or "subscriber."

The terms "receive," "provide," "send," "input," "output," and "report" should not be taken to indicate or imply, unless otherwise explicitly specified: (i) any particular degree of directness with respect to the relationship between an object and a subject; and/or (ii) a presence or absence of a set of intermediate components, intermediate actions, and/or things interposed between an object and a subject.

The terms first (e.g., first tag), second (e.g., second tag), etc. are not to be construed as denoting or implying order or time sequences unless expressly indicated otherwise. Rather, they are to be construed as distinguishing two or more elements. In some embodiments, the two or more elements, although distinguishable, have the same makeup. For example, a first memory and a second memory may indeed be two separate memories but they both may be RAM devices that have the same storage capacity.

The term "causing," or "cause" means that one or more systems (e.g., computing devices) and/or components (e.g., processors) may in in isolation or in combination with other systems and/or components bring about or help bring about a particular result or effect. For example, a server may "cause" a message to be displayed by a computing entity and/or the same computing entity may "cause" the same message to be displayed (e.g., via a processor that executes instructions and data in a display memory of the user device). Accordingly, one or both systems may in isolation or together "cause" the effect of displaying a message.

The following embodiments represent exemplary aspects of concepts contemplated herein. Any one of the following embodiments may be combined in a multiple dependent manner to depend from one or more other clauses. Further, any combination of dependent embodiments (e.g., clauses that explicitly depend from a previous clause) may be combined while staying within the scope of aspects contemplated herein. The following clauses are exemplary in nature and are not limiting.

### XII. Various Embodiments of the Disclosure

Embodiment 1: An antenna comprising: an assembly of conductors comprising an inner conductor, a middle conductor, and an outer conductor; and a plurality of switches, wherein: the inner conductor is most central relative to the middle conductor and the outer conductor, the middle conductor is situated over the inner conductor, the outer conductor: is situated over the inner conductor and the middle conductor, serves as an outermost layer that is exposed to an environment, and is portioned into a plurality of sections, each section of the plurality of sections comprising one or more slots that are configured to allow a signal to radiate out of the outer conductor and into the environment, and the plurality of switches is configured to operate to cause the signal to travel along the inner conductor and up to the middle conductor at a certain section of the plurality of sections to cause at least a portion of the signal to radiate out of the one or more slots of the certain section, without the signal radiating out the one or more slots of at least one other section of the plurality of sections.

Embodiment 2: The antenna of embodiment 1, wherein the certain section is configured to receive a response from a tag located in the environment that has sent the response based at least in part on receiving the portion of the signal that is radiated out of the one or more slots of the certain section.

Embodiment 3: The antenna of embodiment 1 or 2, wherein at least one of the inner conductor, the middle conductor, or the outer conductor is configured to carry a communication signal to the plurality of switches to operate the plurality of switches.

Embodiment 4: The antenna of embodiment 3, wherein the communication signal is carried using at least one of a 1-Wire protocol or an SDI-12 protocol.

Embodiment 5: The antenna of embodiment 1 or 2, wherein the inner conductor and the outer conductor are configured to carry a non-radio frequency band signal using a 2-wire protocol to operate the plurality of switches.

Embodiment 6: The antenna of embodiment 5, wherein the antenna further comprises capacitive energy storage at each switch of the plurality of switches that is used to power reading circuitry for the switch.

Embodiment 7: The antenna of embodiment 1 or 2, wherein the plurality of switches is configured to be operated via a communication signal carried using a wireless communication protocol.

Embodiment 8: The antenna of embodiment 7, wherein at least one of the inner conductor, the middle conductor, or the outer conductor is configured to power each switch of the plurality of switches.

Embodiment 9: An antenna partitioned into a plurality of sections along a length of the antenna, wherein each section of the plurality of sections comprises at least one slot that is shaped to correspond to a specific signal frequency such that at least a portion of a signal at the specific signal frequency traveling through the antenna is radiated out of the at least one slot, without the signal radiating out the at least one slot of at least one other section of the plurality of sections.

Embodiment 10: The antenna of embodiment 9, wherein at least one of a signal strength intensity or an orientation of a section of the plurality of sections is controlled by a slot size orientation for the at least one slot and a number of slots.

Embodiment 11: The antenna of embodiment 9 or 10, wherein the at least one slot is at least one of coupled to or covered by a resonator configured to couple energy from the antenna to the specific signal frequency.

Embodiment 12: The antenna of embodiment 11, wherein the resonator comprises a uniquely shaped conductor.

Embodiment 13: The antenna of embodiment 11, wherein the resonator is attached on heat-shrink tubing over the at least one slot.

Embodiment 14: The antenna of any of embodiments 9 to 13, further comprising an inner conductor, a dielectric, an outer conductor, and a jacket.

Embodiment 15: A method comprising: receiving, by at least one computing entity, a request to identify a location of an asset in an environment; performing, by the at least one computing entity, an iterative process to cause an interrogation signal to radiate out of each section of a plurality of sections of a radiating antenna, wherein an iteration of the iterative process comprises: causing, by the at least one computing entity, the interrogation signal to radiate out of one or more sections of the plurality of sections, without the interrogation signal radiating out of remaining sections of the plurality of sections; and receiving, by the at least one computing entity, tag responses from tags that are coupled to assets in the environment and are within at least one of a distance or a signal strength threshold of the one or more sections that are radiating the interrogation signal; identifying, by the at least one computing entity and based at least in part on the tag responses, the location of the asset in the environment; and causing, by the at least one computing entity, signaling to identify the location of the asset in the environment.

Embodiment 16: The method of embodiment 15, wherein the radiating antenna comprises an inner conductor, a middle conductor, and an outer conductor, and causing the interrogation signal to radiate out of the one or more sections of the plurality of sections, without the interrogation signal radiating out of the remaining sections of the plurality of sections, involves causing one or more switches to at least one of open or close to cause the interrogation signal to travel along the inner conductor and up to the middle conductor at the one or more sections to cause the interrogation signal to radiate out of the one or more sections, without the interrogation signal radiating out of the remaining sections of the plurality of sections.

Embodiment 17: The method of embodiment 15 or 16, wherein each section of the radiating antenna comprises at least one slot that is shaped to correspond to a specific signal frequency, and causing the interrogation signal to radiate out of the one or more sections of the plurality of sections, without the interrogation signal radiating out of the remaining sections of the plurality of sections, involves causing the radiating antenna to produce the interrogation signal having the specific signal frequency that the at least one slot for the one or more sections is tuned to.

Embodiment 18: The method of any of embodiments 15 to 17, wherein identifying the location of the asset in the environment involves: determining, based at least in part on the tag responses, that a single section of the plurality of sections received a tag response from a tag associated with the asset; and identifying the location of the asset based at least in part on the location being associated with the single section.

Embodiment 19: The method of any of embodiments 15 to 17, wherein identifying the location of the asset in the environment involves: determining, based at least in part on the tag responses, that at least two sections of the plurality of sections received tag responses from a tag associated with the asset; comparing signal strength values of the tag responses from the tag associated with the asset received by the at least two sections; and identifying the location of the asset based at least in part on the location being associated with one of the at least two sections that received a tag response from the tag responses from the tag associated with the asset having a highest signal strength value.

Embodiment 20: The method of any of embodiments 15 to 17, wherein identifying the location of the asset in the environment involves: determining, based at least in part on the tag responses, that at least two sections of the plurality of sections received tag responses from a tag associated with the asset; comparing signal strength values of the tag responses from the tag associated with the asset received by the at least two sections; determining the signal strength values satisfy a threshold with respect to each other; and responsive to determining the signal strength values satisfy the threshold with respect to each other, comparing at least one other signal characteristic of the tag responses from the tag associated with the asset received by the at least two sections to detect the location of the asset.

### XIII. Other various Embodiments of the Disclosure

Embodiment 21: A system comprising:
a radiating signal carrier that includes a plurality of sections, each section of the plurality of sections including a plurality of slots, the signal carrier configured to carry a signal, at least one slot being configured for at least one of: radiating at least a portion of the signal or receiving a tag signal in response to an event;
a tag configured to transmit the tag signal, wherein the tag is coupled to an asset;
at least one computer processor; and
one or more computer storage media storing computer-useable instructions that, when used by the at least one computer processor, cause the at least one computer processor to perform operations comprising:
   associating each section, of the plurality of sections, to a respective geographical section, of a plurality of geographical sections in a geographical environment; and
   based on the associating and the at least one slot receiving the tag signal, detecting a location of the tag.

Embodiment 22: The system of embodiment 21, wherein the radiating signal carrier includes a triaxial cable, wherein the triaxial cable includes:
an inner conductor, an outer conductor, and a middle conductor situated between the outer conductor and inner conductor; and
a plurality of switches, wherein each switch defines at least a portion of a section, of the plurality of sections, and wherein a position of each switch indicates whether the inner conductor or the middle conductor carries the signal;
wherein the radiating of at least a portion of the signal or the receiving of the tag signal is further based on at least one switch, of the plurality of switches, opening or closing and the middle conductor carrying the signal.

Embodiment 23: The system of embodiment 21, wherein the radiating signal carrier includes a coaxial cable, wherein each section, of the plurality of sections, includes at least one of: a uniquely shaped slot and a uniquely shaped resonator that fits over the uniquely shaped slot, and wherein each uniquely shaped slot or uniquely shaped resonator is configured to receive or transmit data at a respective frequency range;
wherein the radiating of at least a portion of the signal or the receiving of the tag signal is further based on a unique shape of a set of slots or resonators for a first section, of the plurality of sections, receiving or transmitting data at a first frequency range, and wherein only the set of slots are capable of radiating at least a portion of the signal or receiving the tag signal, and wherein no other slots from any other section receives or transmits data at the first frequency range.

Embodiment 24: A computer-implemented method comprising:
causing at least a portion of a signal to radiate out of a first slot of a signal carrier, wherein the signal carrier includes a plurality of sections, each section of the plurality of sections, including one or more slots, the signal carrier configured to carry the signal;
at least partially responsive to the causing of at least a portion of the signal to radiate, receiving, from a tag, a tag signal, wherein the tag is coupled to an asset;
   associating each section, of the plurality of sections, to a respective geographical section, of a plurality of geographical sections in a geographical environment; and
   based on the associating and the receiving of the tag signal, detecting a location of the tag.

Embodiment 25: A radiating signal carrier comprising:
a plurality of sections, each section, of the plurality of sections being defined at least partially by at least one of: a switch or a shape of at least one slot, of a plurality of slots; and
wherein the at least one slot, of the plurality of slots, being configured for at least one of: radiating at least a portion of a signal or receiving a tag signal of a tag in response to an event, wherein the at least one slot is used for detecting a location of the tag.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Similarly, while operations are described in a particular order, this should not be understood as requiring that such operations be performed in the particular order described or in sequential order, or that all described operations be performed, to achieve desirable results. In certain circumstances, multitasking and parallel processing may be advantageous. Moreover, the separation of various components in the various embodiments described above should not be understood as requiring such separation in all embodiments, and the described program components (e.g., modules) and systems may be integrated together in a single software product or packaged into multiple software products.

Many modifications and other embodiments of the disclosure will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. An antenna comprising:
an assembly of conductors comprising an inner conductor (302), a middle conductor (304), and an outer conductor (306); and
a plurality of switches (320, 321, 322, 323, 324, 325, 326, 327), wherein:
the inner conductor (302) is most central relative to the middle conductor (304) and the outer conductor (306),
the middle conductor (304) is situated over the inner conductor (302),
the outer conductor (306):
is situated over the inner conductor (302) and the middle conductor (304),
serves as an outermost layer that is exposed to an environment, and
is portioned into a plurality of sections (310, 312, 316, 318), each section (310, 312, 316, 318) of the plurality of sections (310, 312, 316, 318) comprising one or more slots (380, 382, 384, 386) that are configured to allow a signal to radiate out of the outer conductor (306) and into the environment, and
the plurality of switches (320, 321, 322, 323, 324, 325, 326, 327) is configured to operate to cause the signal to travel along the inner conductor (302) and up to the middle conductor (304) at a certain section (310, 312, 316, 318) of the plurality of sections (310, 312, 316, 318) to cause at least a portion of the signal to radiate out of the one or more slots (380, 382, 384, 386) of the certain section (310, 312, 316, 318), without the signal radiating out the one or more slots (380, 382, 384, 386) of at least one other section (310, 312, 316, 318) of the plurality of sections (310, 312, 316, 318).

2. The antenna of claim 1, wherein the certain section (310, 312, 316, 318) is configured to receive a response from a tag (105-1, 230-1) located in the environment that has sent the response based at least in part on receiving the portion of the signal that is radiated out of the one or more slots (380, 382, 384, 386) of the certain section (310, 312, 316, 318).

3. The antenna of claim 1 or 2, wherein at least one of the inner conductor (302), the middle conductor (304), or the outer conductor (306) is configured to carry a communication signal to the plurality of switches (320, 321, 322, 323, 324, 325, 326, 327) to operate the plurality of switches (320, 321, 322, 323, 324, 325, 326, 327).

4. The antenna of claim 3, wherein the communication signal is carried using at least one of a 1-Wire protocol or an SDI-12 protocol.

5. The antenna of claim 1 or 2, wherein the inner conductor (302) and the outer conductor (306) are configured to carry a non-radio frequency band signal using a 2-wire protocol to operate the plurality of switches (320, 321, 322, 323, 324, 325, 326, 327).

6. The antenna of claim 5, wherein the antenna further comprises capacitive energy storage at each switch (320, 321, 322, 323, 324, 325, 326, 327) of the plurality of switches (320, 321, 322, 323, 324, 325, 326, 327) that is used to power reading circuitry for the switch (320, 321, 322, 323, 324, 325, 326, 327).

7. The antenna of claim 1 or 2, wherein the plurality of switches (320, 321, 322, 323, 324, 325, 326, 327) is configured to be operated via a communication signal carried using a wireless communication protocol.

8. The antenna of claim 7, wherein at least one of the inner conductor (320), the middle conductor (304), or the outer conductor (306) is configured to power to each switch (320, 321, 322, 323, 324, 325, 326, 327) of the plurality of switches (320, 321, 322, 323, 324, 325, 326, 327).

9. A method comprising:
receiving, by at least one computing entity (05), a request to identify a location of an asset (105, 230) in an environment;
performing, by the at least one computing entity (05), an iterative process to cause an interrogation signal to radiate out of each section of a plurality of sections (310, 312, 316, 318, 402, 404, 406) of a radiating antenna, wherein an iteration of the iterative process comprises:
causing, by the at least one computing entity (05), the interrogation signal to radiate out of one or more sections (310, 312, 316, 318, 402, 404, 406) of the plurality of sections (310, 312, 316, 318, 402, 404, 406), without the interrogation signal radiating out of remaining sections (310, 312, 316, 318, 402, 404, 406) of the plurality of sections (310, 312, 316, 318, 402, 404, 406); and
receiving, by the at least one computing entity (05), tag responses from tags 105-1, 230-1) that are coupled to assets (105, 230) in the environment and are within at least one of a distance or a signal strength threshold of the one or more sections (310, 312, 316, 318, 402, 404, 406) that are radiating the interrogation signal;
identifying, by the at least one computing entity (05) and based at least in part on the tag responses, the location of the asset (105, 230) in the environment; and
causing, by the at least one computing entity (05), signaling to identify the location of the asset (105, 230) in the environment.

10. The method of claim 9, wherein the radiating antenna comprises an inner conductor (302), a middle conductor (304), and an outer conductor (306), and causing the interrogation signal to radiate out of the one or more sections (310, 312, 316, 318, 402, 404, 406) of the plurality of sections (310, 312, 316, 318, 402, 404, 406), without the interrogation signal radiating out of the remaining sections (310, 312, 316, 318, 402, 404, 406) of the plurality of sections (310, 312, 316, 318, 402, 404, 406), involves causing one or more switches (320, 321, 322, 323, 324, 325, 326, 327) to at least one of open or close to cause the interrogation signal to travel along the inner conductor (302) and up to the middle conductor (304) at the one or more sections (310, 312, 316, 318, 402, 404, 406) to cause the interrogation signal to radiate out of the one or more sections (310, 312, 316, 318, 402, 404, 406), without the interrogation signal radiating out of the remaining sections (310, 312, 316, 318, 402, 404, 406) of the plurality of sections (310, 312, 316, 318, 402, 404, 406).

11. The method of claim 9 or 10, wherein each section (310, 312, 316, 318, 402, 404, 406) of the radiating antenna comprises at least one slot (402-1, 404-1, 406-1) that is shaped to correspond to a specific signal frequency, and causing the interrogation signal to radiate out of the one or more sections (310, 312, 316, 318, 402, 404, 406) of the plurality of sections (310, 312, 316, 318, 402, 404, 406), without the interrogation signal radiating out of the remaining sections (310, 312, 316, 318, 402, 404, 406) of the plurality of sections (310, 312, 316, 318, 402, 404, 406), involves causing the radiating antenna to produce the interrogation signal having the specific signal frequency that the at least one slot (402-1, 404-1, 406-1) for the one or more sections (310, 312, 316, 318, 402, 404, 406) is tuned to.

12. The method of claim 9 or 10, wherein each section (310, 312, 316, 318, 402, 404, 406) of the radiating antenna comprises a cable corresponds to a specific signal frequency, and causing the interrogation signal to radiate out of the one or more sections (310, 312, 316, 318, 402, 404, 406) of the plurality of sections (310, 312, 316, 318, 402, 404, 406), without the interrogation signal radiating out of the remaining sections (310, 312, 316, 318, 402, 404, 406) of the plurality of sections (310, 312, 316, 318, 402, 404, 406), involves causing the radiating antenna to produce the interrogation signal having the specific signal frequency that the cable for the one or more sections (310, 312, 316, 318, 402, 404, 406) is tuned to.

13. The method of any of claims 9 to 12, wherein identifying the location of the asset (105, 230) in the environment involves:
determining, based at least in part on the tag responses, that a single section (310, 312, 316, 318, 402, 404, 406) of the plurality of sections (310, 312, 316, 318, 402, 404, 406) received a tag response from a tag (105-1, 230-1) associated with the asset (105, 230); and
identifying the location of the asset (105, 230) based at least in part on the location being associated with the single section (310, 312, 316, 318, 402, 404, 406).

14. The method of any of claims 9 to 13, wherein identifying the location of the asset (105, 230) in the environment involves:
determining, based at least in part on the tag responses, that at least two sections (310, 312, 316, 318, 402, 404, 406) of the plurality of sections (310, 312, 316, 318, 402, 404, 406) received a tag response from a tag (105-1, 230-1) associated with the asset (105, 230);
comparing signal strength values of the tag response from the tag (105-1, 230-1) associated with the asset (105, 230) received by the at least two sections (310, 312, 316, 318, 402, 404, 406); and
identifying the location of the asset (105, 230) based at least in part on the location being associated with one of the at least two sections (310, 312, 316, 318, 402, 404, 406) that received the tag response from the tag (105-1, 230-1) associated with the asset (105, 230) having a highest signal strength value.

15. The method of any of claims 9 to 14, wherein identifying the location of the asset (105, 230) in the environment involves:
determining, based at least in part on the tag responses, that at least two sections (310, 312, 316, 318, 402, 404, 406) of the plurality of sections (310, 312, 316, 318, 402, 404, 406) received a tag response from a tag (105-1, 230-1) associated with the asset (105, 230);
comparing signal strength values of the tag response from the tag (105-1, 230-1) associated with the asset (105, 230) received by the at least two sections (310, 312, 316, 318, 402, 404, 406);
determining the signal strength values satisfy a threshold with respect to each other; and
responsive to determining the signal strength values satisfy the threshold with respect to each other, comparing at least one other signal characteristic of the tag responses from the tag (105-1, 230-1) associated with the asset (105, 230) received by the at least two sections (310, 312, 316, 318, 402, 404, 406) to detect the location of the asset (105, 230).
